# EUROPEAN PATENT SPECIFICATION

(11) **EP 3 266 538 B1**
(45) Date of publication and mention of the grant of the patent: **02.12.2020**
(21) Application number: 17179726.9
(22) Date of filing: 27.06.2012
(51) Int. Cl.: B22D 17/20

(54) **PISTON FOR A DIE-CASTING MACHING**
KOLBEN FÜR EINE DRUCKGUSSMASCHINE
PISTON POUR MACHINE À COULER SOUS PRESSION

(30) Priority: 28.06.2011 IT BS20110095
(43) Date of publication of application: 10.01.2018
(62) Divisional of application: 12745551.7
(73) Proprietor: Copromec Die Casting S.r.l. A Socio Unico, 25077 Roè Volciano Brescia (IT)
(72) Inventor: SCHIVALOCCHI, Carlo, 25077 Roè Volciano, BRESCIA (IT); SCHIVALOCCHI, Chiara, 25077 Roè Volciano, BRESCIA (IT); SCHIVALOCCHI, Nicola, 25077 Roè Volciano, BRESCIA (IT)
(74) Representative: Chimini, Francesco

(56) References cited:
- DE-A1- 3 913 494
- DE-U1- 29 721 722
- JP-A- 2009 279 645
- US-B2- 6 354 359

## Description

The object of the present invention is a piston for a die-casting machine, in particular for a cold chamber die-casting machine. In particular, the present invention refers to a piston with a lubrication circuit adapted to facilitate the sliding of the piston in a container of molten metal of a press for such die-casting machine.

According to the preamble of claim 1, a piston for a die-casting machine comprises a stem and a piston head removably connected to the stem and having a side wall with at least one sealing area suitable to provide a seal on the wall of the container of the press. Pistons further provided with a lubrication circuit suitable for injecting a lubricant on the piston head are already known.

One problem of such a kind of piston is the fluidic connection of the lubrication circuit between the stem and the head.

Examples of such pistons are described in DE3913494A1, JP2009279645A, DE29721722U1, US6354359B2, JP2010269319A. However, also these embodiments of pistons have proved to be unsatisfactory, particularly because of the fact that the fluidic connection of the lubrication circuit is not sealed-tight.

The object of the present invention is to provide a solution to the abovementioned problem.

Such object is achieved by a piston according to claim 1.

The features and advantages of the piston according to the present invention will be apparent from the following description, given by way of non-limiting example, of its preferred embodiments according to the appended drawings. In said drawings:
- figure 1 shows a piston according to the invention, in a first embodiment, in a perspective view;
- figure 2 is a side view of the piston;
- figure 3 is an axial section of the piston along the line A-A of figure 2;
- figure 4 shows the piston inserted into a container of a press of a die-casting machine;
- figure 5 is a perspective view of only the piston's stem;
- figure 6 is a side view of the stem;
- figure 7 is an axial section of the stem along the line A-A in figure 6;
- figure 8 is another side view of the stem;
- figure 9 is an axial section of the stem along the line A-A in figure 8;
- figure 10 is a cross-sectional view of the stem along the line B-B in figure 8;
- figure 11 is an enlarged side view of the distal end of the stem;
- figure 12 is a cross-sectional view of the end of the stem along the line D-D in figure 11;
- figure 13 is another enlarged side view of the distal end of the stem;
- figure 14 is an axial sectional view of the end of the stem along the line C-C in figure 13;
- figure 15 is a cross-sectional view of the end of the stem along the line E-E in figure 13;
- figure 16 is an axial section of a piston in a variant embodiment, without a sealing ring;
- figure 17 is an axial section of the piston of figure 16 provided with a sealing ring;
- figures 17a and 17b are two further axial sections of the piston of figure 16;
- figure 18 is an axial section of only the piston head of figure 17, wherein the metal penetrating below the sealing ring is shown;
- figure 18a is an enlarged view of the detail B circled in figure 21;
- figures 19, 20, 21 show, in perspective, a side and axial cross-sectional view, respectively, of an axial pin for supporting the piston head;
- figure 22 is an axial section of a piston in a variant embodiment; and
- figures 23 and 23a are two axial sections of a piston in a further embodiment.

In the following description, whenever possible, some elements common to the various embodiments of the invention are indicated at the same numeric references.

Moreover, unless expressly indicated otherwise, elements described for one embodiment of a piston may be present, optionally adapted as required, also in other described embodiments of a piston.

With reference to the attached figures, at 1; 500; 700 a piston of a press of a die-casting machine, in particular of the cold chamber type, is shown. The press comprises a container 400 wherein the piston 1; 500; 700, or at least one of its terminal parts for pushing the molten metal, is housed slidably. The container 400 has, in its upper part and at its end, a loading hole for molten metal, e.g., aluminum. At the end opposite to said loading hole, the container 400 has slits 402 to which correspond starting points of casting branches that flow into a die. The piston 1; 500; 700 is thus axially slidable inside the container 400 to push the metal fed through the loading hole into the casting branches and then into the die.

The piston 1; 500; 700 comprises a stem 10; 510; 710 extending between a proximal end 11, either rearward with respect to the piston feed direction in the container and a distal end 12; 512; 712, or forward, along a piston axis X.

The piston 1; 500 terminates with a piston head 50; 550; 750 extending from the distal end of the stem and has a side wall with at least one sealing area 52; 552; 752 suitable to form a seal on the wall of said container 400 of the press.

The piston 1; 500; 700 is provided with a lubrication circuit adapted to facilitate the sliding of the piston in the container 400.

Said lubrication circuit comprises first lubrication ducts 14, 16, 18 made in the stem 10; 510; 710 and terminating at the distal end 12; 512; 712 of said stem, and second ducts 20 made in the piston head 50; 550; 750, communicating fluidically with said first ducts and flowing into the side wall corresponding at least to said sealing area 52; 552; 752.

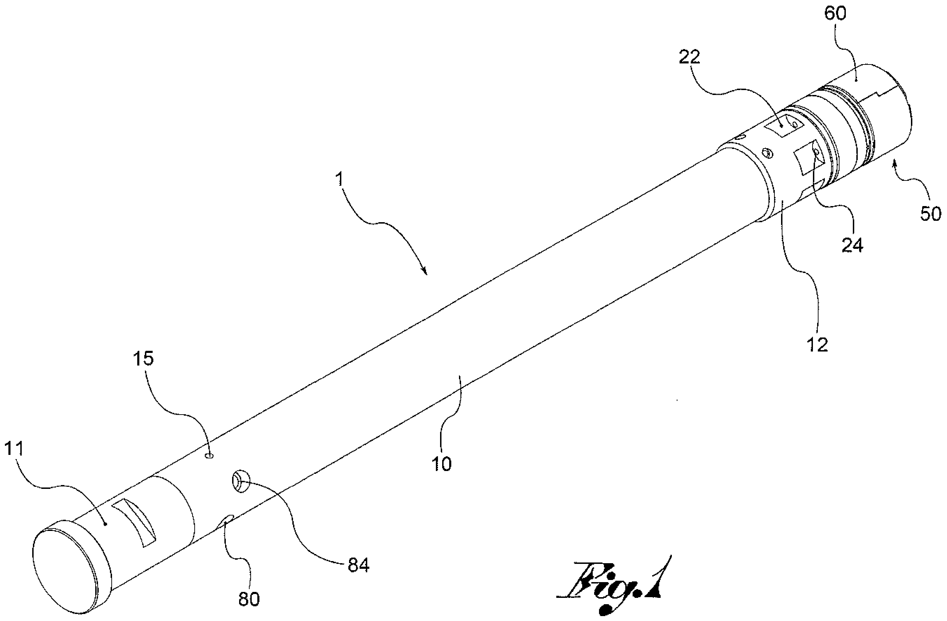

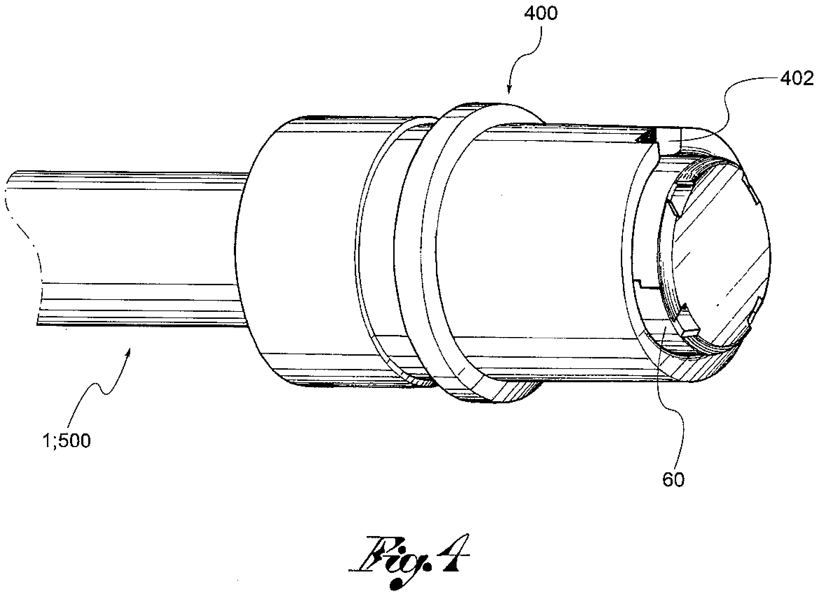

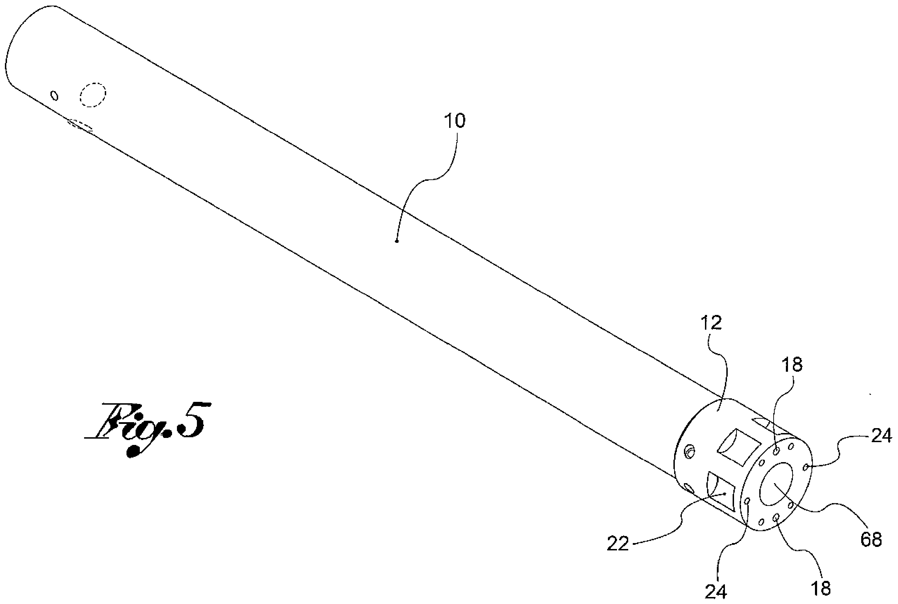

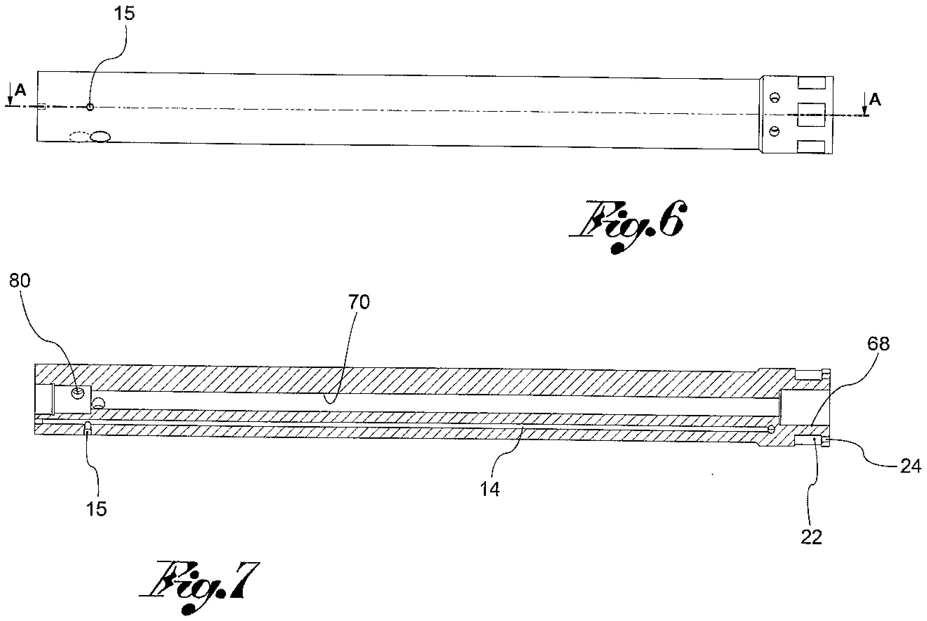

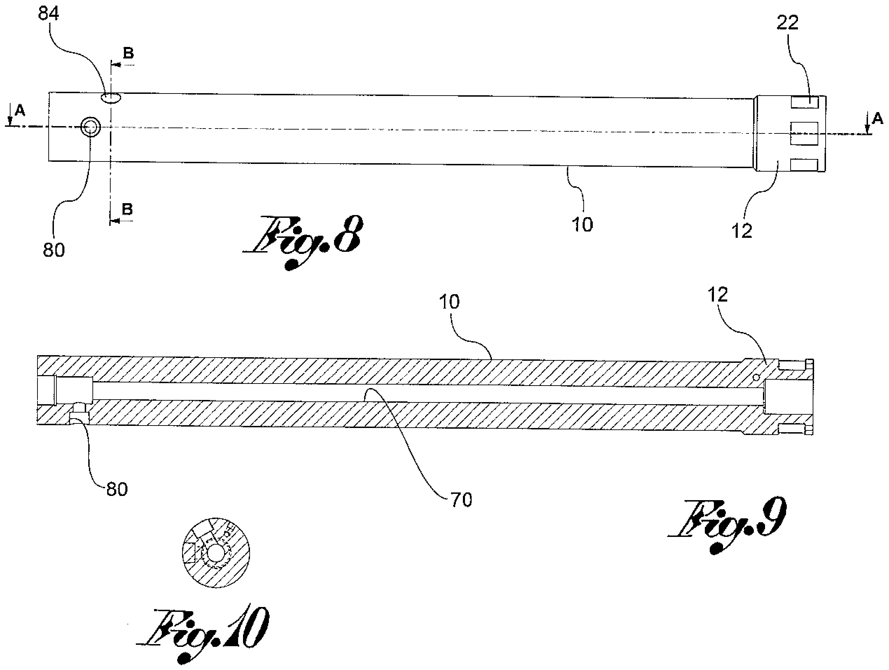

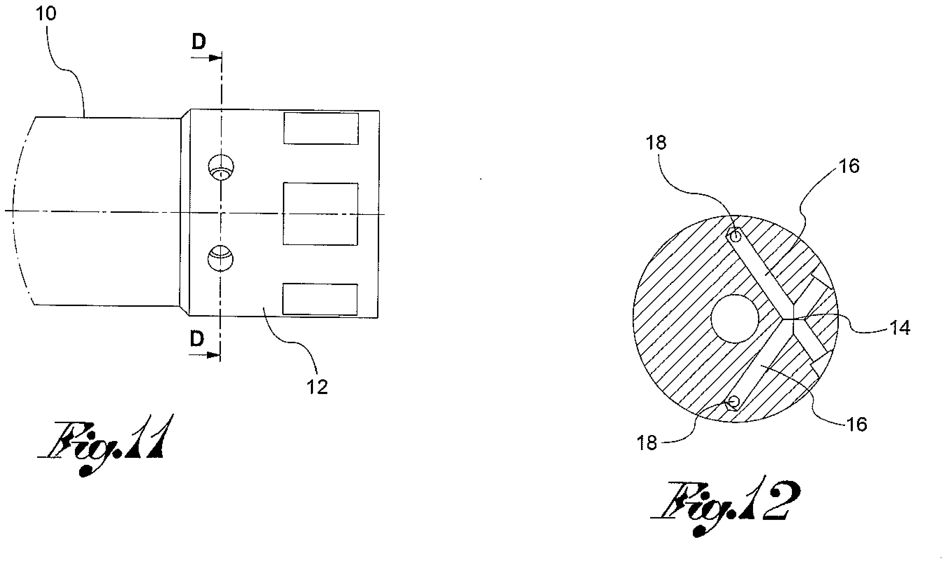

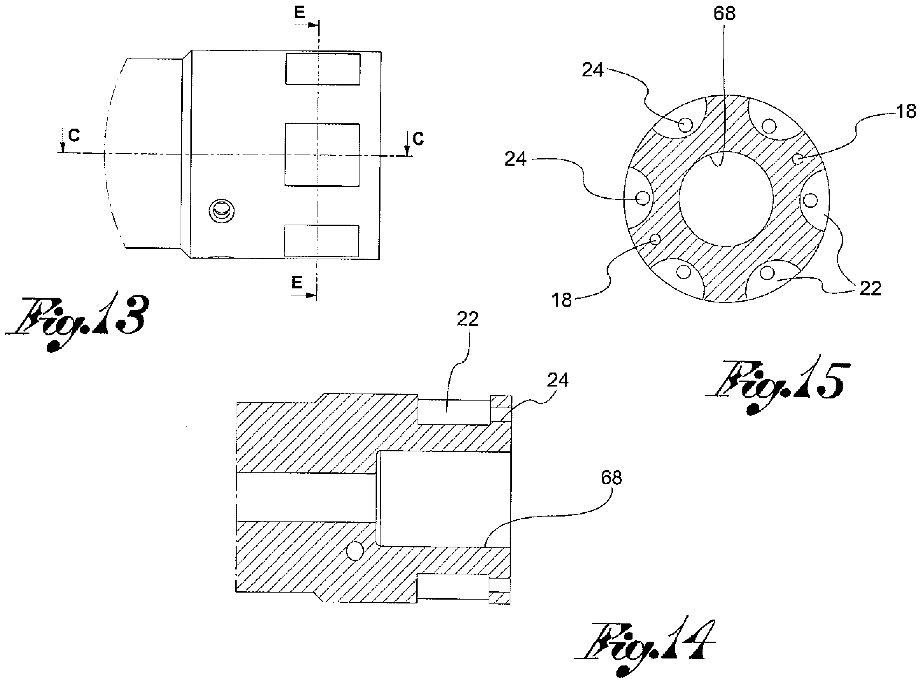

In an embodiment illustrated in figures 1 to 15, the first lubrication ducts comprise a feed duct 14 extending longitudinally from a lubricant inlet hole 15 and branching into at least two distribution ducts 18 angularly equidistant from the piston axis X.

The second lubrication ducts 20 are a continuation of said distribution ducts 18. In other words, the terminal end of each distribution duct 18 is in direct communication with the initial end of a corresponding second lubrication duct 20.

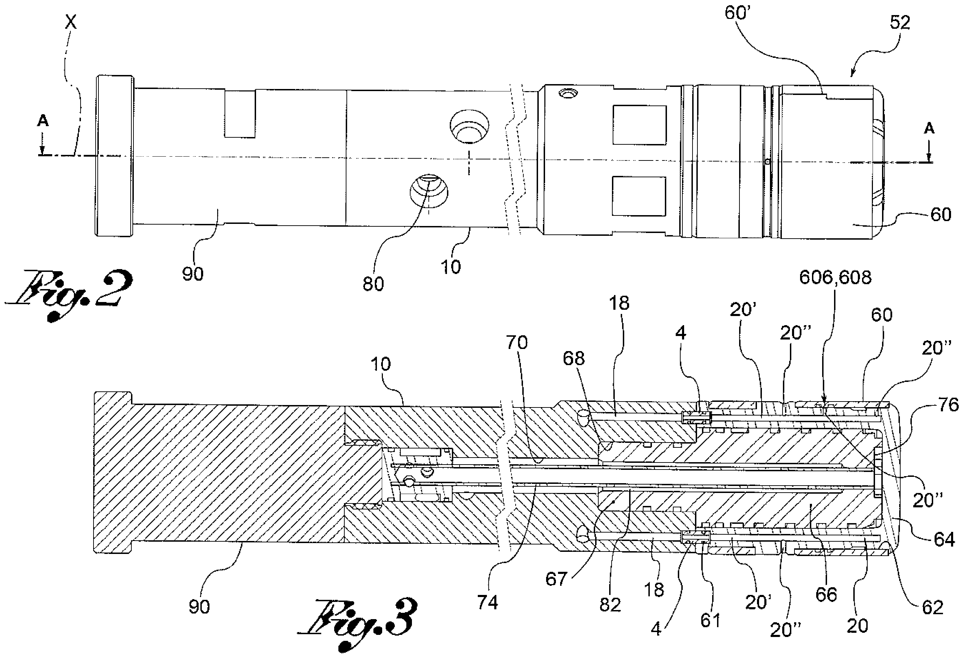

In a preferred embodiment, the inlet hole 15 for the lubricant is made near the proximal end 11 of the stem 10. The feed duct 14 thus extends almost over the entire length of the stem, parallel to the piston axis X and lateral with respect to an axial cooling duct, which will be described below, ending near the distal end 12. As may be seen in particular in figure 3, also the distribution ducts 18, made in the distal end portion 12 of the stem 10, extend parallel to the piston axis X. The feed duct 14 and the distribution ducts 18 are connected to each other by branching ducts 16 extending from the end of the feed duct 14 in a transverse direction with respect to the piston axis X.

In a preferred embodiment, the piston head 50; 550; 750 has at least one sealing ring 60 housed in a respective ring seat 62. Examples of piston heads with sealing ring to which the teaching of the present invention may be applied are described in WO2007116426A1 and WO2009125437A1 in the name of the same applicant.

The ring seat 62 is formed by an annular recess made in the lateral surface of the piston head. Said ring seat 62 is radially delimited by a bottom 62' and axially at least by a rear edge 62a, preferably also by a front edge 62b located near the front face 602 of the piston head.

For example, the bottom of the sealing ring seat 62 may advantageously be connected to the front surface 602 of the piston head through connecting channels 604 so that the molten metal present in the container may flow under the ring and, solidifying, create a progressive thickening that causes the ring to enlarge radially, compensating for its wear and ensuring the sealing effect over time. It should be noted that, in one embodiment, the sealing ring 60 has a longitudinal gap 60', e.g., in the form of a step, which allows it to expand radially.

In accordance with an aspect of the invention, the second lubrication ducts 20 flow at least into the ring seat 62 below the same. At the open end of said second ducts 20, the sealing ring is closed. Therefore, said second ducts 20 are covered, and thus protected, by the sealing ring 60 against possible obstructions by the metal that should penetrate between the piston and the container 400.

The pressurized lubricant is then forced to infiltrate under the sealing ring and out of the piston through the gaps between the sealing ring 60 and the piston head and/or through the longitudinal slit 60' of the sealing ring 60.

In particular, the pressurized lubricant is forced to flow out of the piston through the gaps between the sealing ring 60 and the edges 62a, 62b of the ring seat 62.

To this end, the sealing ring 60 is housed with some play in the respective ring seat 62. 'Housed with play' is intended to mean that the sealing ring 60 is not engaged in a forced manner in the respective ring seat 62 but rather that between the sealing ring 60 and each edge 62a, 62b of the ring seat 62 there is a certain and calibrated gap, e.g., 0.1 mm or less.

With such play or gap, the pressurized lubricant, e.g., at 200 bar, may pass between the sealing ring 60 and the edges 62a, 62b of the ring seat 62, while the metal, even if when in liquid state, may not pass.

It should be noted that the expansion of the lubricant below the sealing ring 60 along the full circumference of the ring seat 62 is made possible and facilitated not only by the high pressure to which the lubricant is subjected but also by the elasticity of the sealing ring 60, due to the presence of the longitudinal slit 60'.

Thus, at least a double effect is achieved: the lubricant, flowing out from the gaps between the ring and the edges of the seat, acts precisely in the contact area between the piston and the inner surface of the container, i.e. the area of the sealing ring 60; moreover, flowing onto the bottom of the ring seat 62, the lubricant contributes to the radial expansion of the ring when the same begins to wear out.

It should be noted that, since the outlet passage of the lubricant is made at least of the circular gaps between the sealing ring 60 and the edges 62a, 62b of the ring seat 62, even if a certain amount of metal in the liquid state could penetrate between the piston head and the container, it is very unlikely that such amount of metal would be distributed precisely around the entire circumference of the gap between the sealing ring 60 and the rear edge 62a of the ring seat 62. Therefore, contrary to the pistons of the prior art, it is practically impossible for the metal to seal completely all the gaps between the sealing ring and the piston head and thus prevent the lubricant from escaping.

In a preferred embodiment, wherein the bottom 62' of the seat 62 of the sealing ring is connected with the front surface 602 of the piston head through connecting channels 604 for an inflow of metal under the sealing ring 62, between the openings 604' of said connecting channels 604 in the bottom 62' of the ring seat 62 and the rear edge 62a of said seat 62, the sealing ring 60 and the ring seat 62 have interlocking or complementary coupling portions 606, 608 providing a kind of labyrinth that prevents liquid metal from penetrating under the sealing ring 60 and - during cooling and solidification - reaching the portion of the ring seat 62 comprised between said interlocking coupling portions and the rear edge 62a of the seat 62. In other words, the liquid metal that reaches the ring seat 62 through the connecting channels 604 is forced to solidify in the front portion of the ring seat 62 between said labyrinth and the front edge 62b (or, if said front edge 62b is not provided, between the labyrinth and the front surface 602 of the piston head).

In an embodiment illustrated in figures 1-15, said interlocking coupling portions comprise one or a pair of annular ribs 606 extending from the bottom 62' of the ring seat 62 and corresponding annular grooves 608 made in the inner wall of the sealing ring 60.

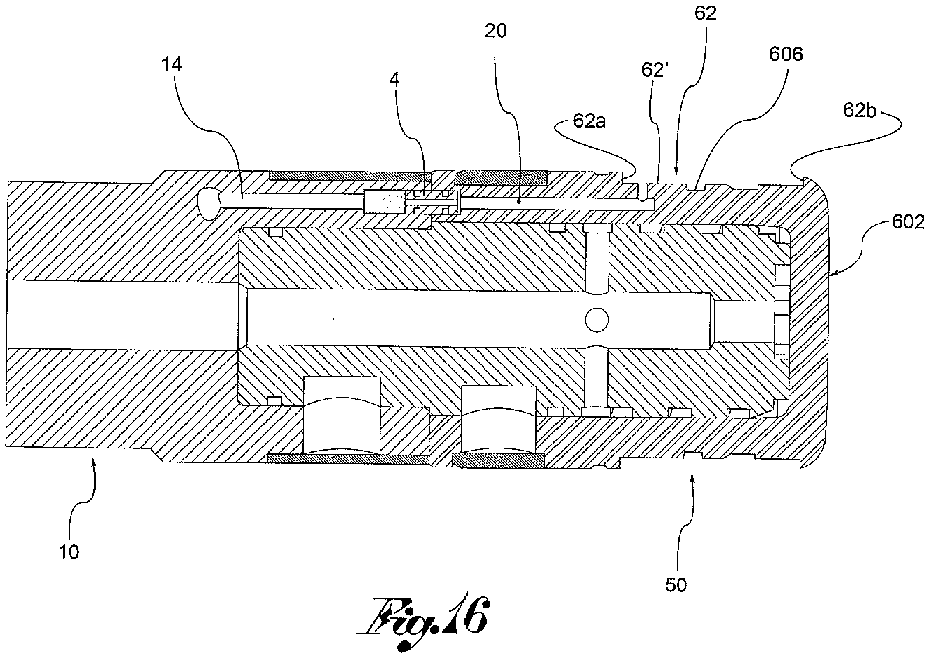

Conversely, in the variant embodiment illustrated in figures 16-18 and 23, the bottom 62' of the ring seat 62 is grooved by an annular groove 606 wherein a rib 608 engages extending from the inner wall of the sealing ring 60.

In a preferred embodiment of the piston, in the bottom 62' of the band seat 62, in an advanced position with respect to the portions of interlocking coupling portions, an annular channel 610 is made, suitable to receive the metal coming from the connection channel 604.

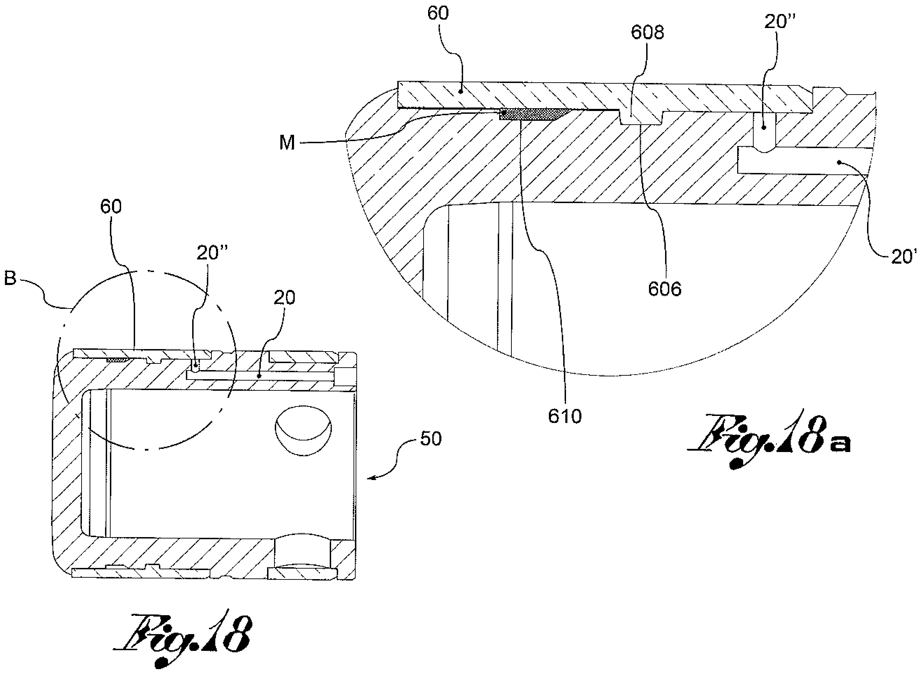

Figure 18a shows schematically the deposit of metal M in the front portion of the ring seat 62, under the sealing ring 60, and particularly in the annular channel 610.

In the embodiments described above, the second lubrication duct 20 which flows under the sealing ring flows into the rear portion of the ring seat 62 between the interlocking coupling portions 606, 608 and the rear edge 62a of the ring seat 62. Thus, said second duct 20 is protected, by means of the labyrinth formed by the interlocking coupling portions, from any obstruction caused by the penetration of the liquid metal under the sealing ring 60. It should be noted that, while the liquid metal which penetrates under the sealing ring 60 cannot pass through the labyrinth, due to its density, pressure and the fact that it tends to solidify as it cools, the lubricant has a density and a pressure making it able to creep between the interlocking coupling portions 606, 608 and to reach the front gap between the sealing ring and the front edge 62b, although most of the lubricant flows out through the gap between the ring and the rear edge 62a, finding no obstacle in this case.

Since the lubricant reaches in a targeted way the area of greatest friction between the piston and the container, the amount of lubricant necessary to ensure the proper sliding of the piston is considerably less than that used in the pistons of the prior art, where the lubricant fails to reach the area of the sealing ring.

It should furthermore be noted that since the sealing ring 60 is positioned close to the front end of the piston, the possible presence of suction means, provided in the intermediate or rear position, to put the chamber of the container in a vacuum, does not have a significant influence on the action of the lubricant.

In a preferred embodiment, the second ducts 20 have a first section 20' parallel to the piston axis X and at least a second radial section 20" flowing at least in the ring seat 62.

The piston head 50; 550; 750 is removably connected to the stem 10; 510; 710. Between the stem and the head there are provided sealed fluidic connection means 4; 560 between the first lubrication ducts 14, 16, 18 and the second lubrication ducts 20.

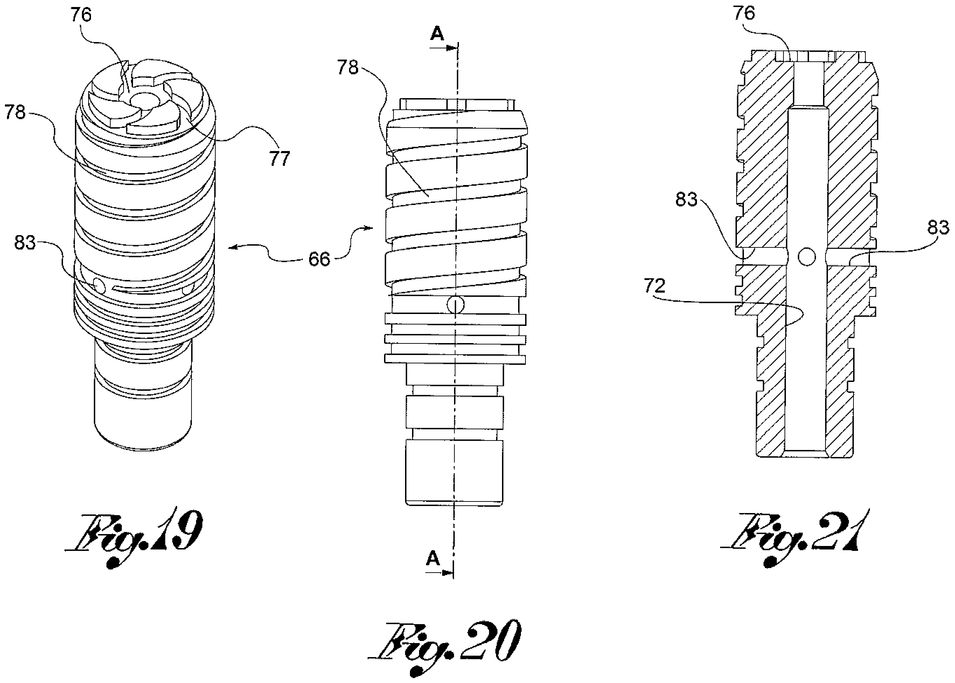

As shown in figures 1-21, the distal end 12 of the stem 10 is flanged so as to allow an axial juxtaposition between the stem 10 and the piston head 50. The sealed fluidic connection means comprise connection bushings 4, each inserted with calibrated interference half in a terminal section of a first lubrication duct 18 and the other half in the initial section of a second lubrication duct 20. Each of said halves is fitted with an annular sealing element 61.

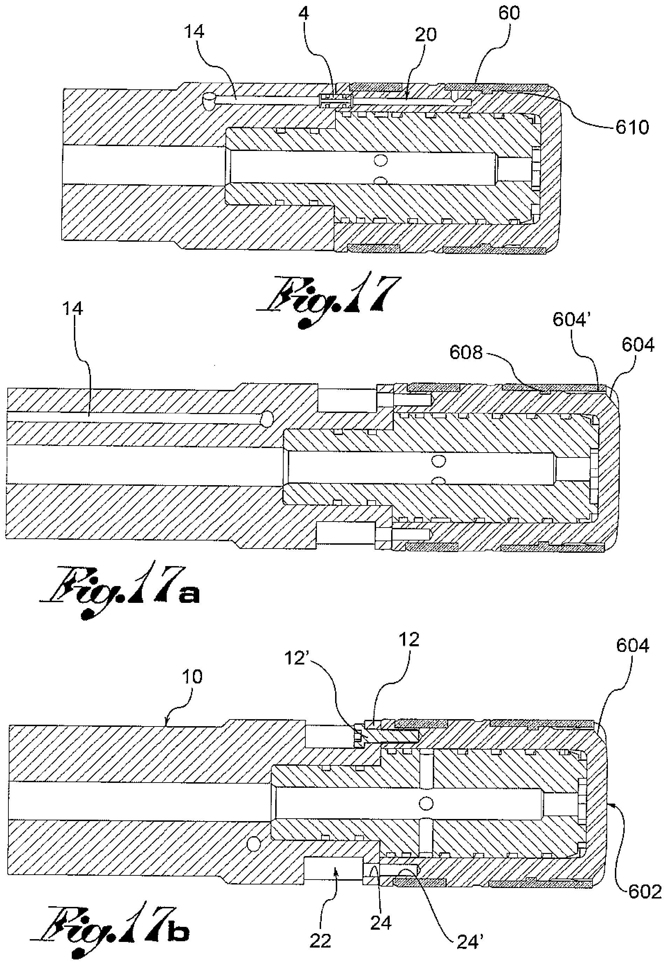

In one embodiment, the flanged distal end 12 of the stem 10 and the adjacent end of the piston head 50 are connected by means of screws 12' (shown in figure 17b). To this end, in the lateral surface of the distal end 12 of the stem 10, a plurality of radial recesses 22 are formed, for example, angularly equidistant and semicircular, which allow access to corresponding screw holes 24 made in said flanged distal end 12, parallel to the piston axis X, and facing corresponding screw holes 24'-visible in the view of figure 17b - made in the piston head 50. By means of said radial recesses 22, it is then possible to screw/unscrew the screws 12' of the stem on the piston head.

Therefore, advantageously, in the piston assembly stages, it is sufficient to insert the fluidic connection bushings 4 in the ends of the lubrication ducts 18 or 20, place the two adjacent faces of the stem and piston head in contact, and then screw in the connecting screws.

The piston according to the embodiment illustrated in figures 16-18 has a structure similar to the one described for the piston of figures 1-15 and differs from the latter only in having a single first lubrication duct 14 extending into the stem 10 and a single second lubrication duct 20 aligned with the first lubrication duct 14 extending into the piston head and comprising, as described above, a first longitudinal section 20' and a second radial section 20" flowing into the ring seat 62.

In a preferred embodiment, the piston 1; 500 is suitable for use in cold chamber die-casting machines. To this end, in the stem and in the piston head, a cooling circuit is made, suitable to circulate a cooling fluid inside the piston head.

In an advantageous embodiment, the piston head 50 comprises a hollow outer body 64 fitted, e.g., in the form of a cap, on an axial support pin 66; 766. In an embodiment illustrated in figures 1-21, said axial support pin 66 has a proximal or rear end 67, engaging in a corresponding axial recess 68 made in the distal end 12 of the stem 10.

Advantageously, between the outer hollow body 64 and the pin 66 there is no play, at least between the respective side walls. In other words, the outer hollow body 64 cannot move radially with respect to pin 66. Similarly, also the proximal end 67 of the pin 66 is inserted with calibrated interference, i.e. without play, in the corresponding axial recess 68.

Such a solution allows, together with the screwing of the head onto the stem by means of screws distributed along a circular crown, to achieve and maintain over time a perfect coaxiality between the piston head and the stem. In other words, the support pin 66, partially penetrating the inside of the stem, acts as a means of guidance and axial support for the piston head 50.

In one embodiment, the stem 10 and the pin 66 have respective and aligned axial cooling holes 70, 72 wherein a delivery tube 74 for a cooling fluid is inserted. Said delivery tube 74 communicates with the outside through an inlet hole 80 for the cooling fluid, e.g., made radially in the stem near the distal end 12, and flows onto the front surface 76 of the axial pin 66. Said front surface 76 is in fluidic communication, e.g., through a plurality of helical ducts 77, with a spiral cooling channel 78 formed in the outer lateral surface of the axial pin 66. Said spiral cooling channel 78 then circulates the cooling fluid around and over the entire outer surface of the axial pin 66 in contact with the outer hollow body 76, cooling it down. The cooling channel 78 flows into a return duct 82 communicating with an outlet hole 84 for the cooling fluid, made in the stem.

In one embodiment, said return duct 82 is formed by an annular space between the axial cooling hole 70, 72 and the delivery tube 74 of the cooling fluid. For example, the return duct 82 communicates with the spiral cooling channel 78 through one or more radial holes 83 made in the axial pin 66.

It is to be noted that, in a preferred embodiment, the longitudinal lubrication holes 14 and cooling holes 70 made in the stem 10 are obtained by machining carried out on the rear side of the stem 10. Therefore, in order to close such holes on said side, the proximal end 11 of the stem 10 comprises a cap 90.

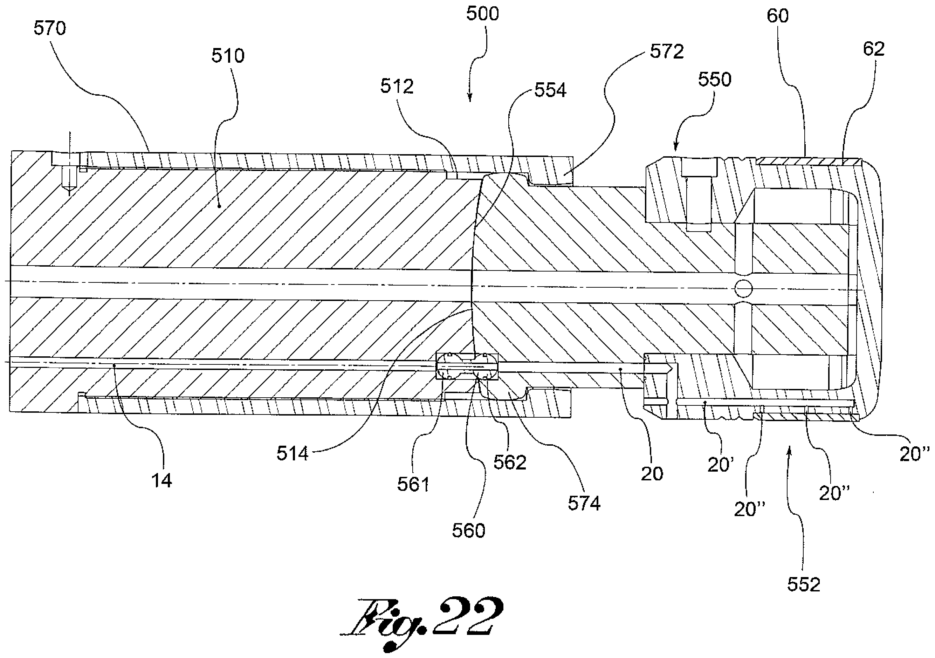

In one variant embodiment of a piston 500 illustrated in figure 22, the distal end 512 of the stem 510 and the piston head 550 have respective spherical coupling surfaces 514, 554 so as to realize an articulated joint between the stem and the piston head. In this embodiment, sealed fluidic connection means comprise ball joints 560, each having a first spherical end 561 inserted in a terminal portion of a respective first lubrication duct 14 and a second spherical end 562 inserted in an initial section of a respective second lubrication duct 20, each of said spherical ends being provided with an annular sealing element.

In one embodiment, the piston head 550 is held in contact with the stem 510 by means of a connecting cap 570 fixed to the stem. For example, said connecting cap 570 has an engagement end portion 572 at the front which forms an undercut wherein a rear step-shaped portion 574 of the piston head 550 engages.

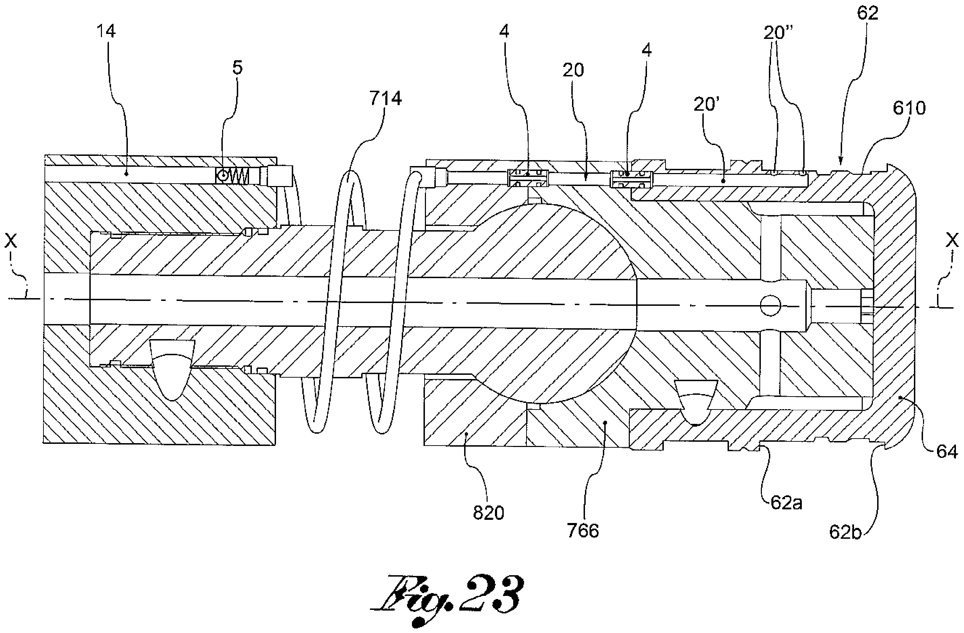

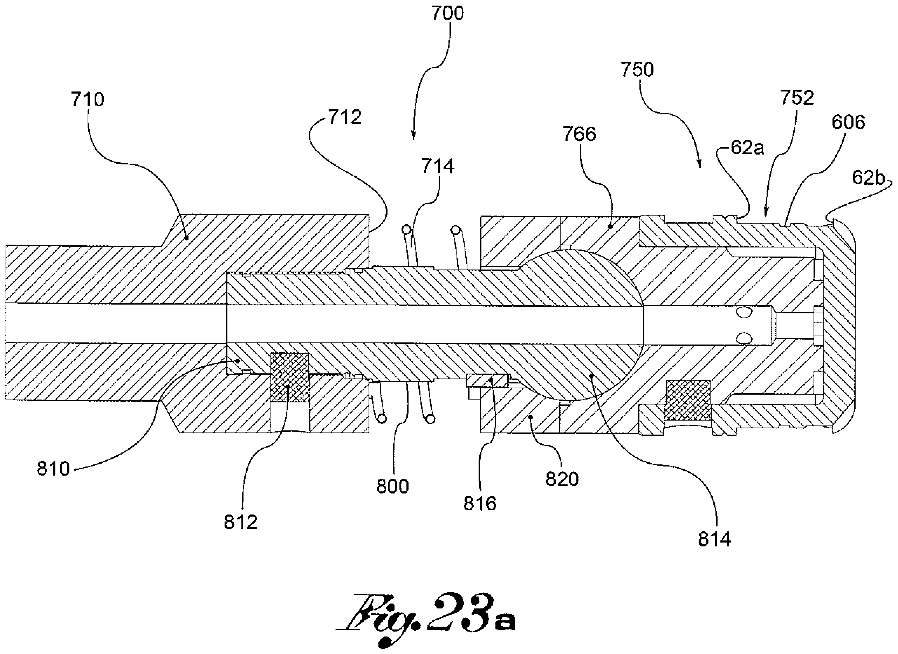

In a further variant embodiment of a piston 700 illustrated in figures 23 and 23a, the piston head 750 is connected to the stem 710 via an articulated joint 800. Said articulated joint 800 allows the head 750 to make deviations of a few degrees with respect to the piston axis X, and hence with respect to the stem 710, e.g., to allow it to slide into a non-perfectly rectilinear container 400.

The articulated joint 800 has a rear portion 810 coupled to the stem 810 and a spherical head 814 whereon the piston head 750 is assembled. The rear portion 810 is fixed axially and radially to the stem 710, e.g., by means of radial blocks 812.

For its assembly on the spherical head 814, the piston head 750 comprises a rear flange 820 surrounding the rear portion of the spherical head 814 and which is removably secured, e.g., by means of screws, to a rear portion of the pin 766 surrounding the front portion of the spherical head 814.

Moreover, preferably, the rear flange 820, and hence the entire piston head 750, is angularly fixed to the articulated joint 800, i.e. it is prevented from rotating about the piston axis X, e.g., by means of a spline 816. Thus, the second lubrication duct 20, and in particular the end section 20", is always turned in the desired direction, normally upwards. In fact, the piston is thus lubricated by the lubricant running from top to bottom; moreover, the metal in the liquid state is less likely to solidify on the upper, hotter part of the piston.

In this embodiment, the piston head 750 being spaced from the stem 710, the first lubrication duct 14, made in the stem 710, is fluidically connected to the second lubrication duct 20, made in the piston head 750, by means of a connecting tube 714. Preferably, said connecting tube 714 has a spiral shape or is, in any case, suitable to allow displacements of the piston head 750 with respect to the stem 710.

The portions of the second lubrication duct 20 made in the rear flange 820, in the pin 766, and in the hollow body 64 are connected to each other through the connection bushings 4.

In a preferred embodiment, along the lubrication circuit, e.g., in the first lubrication duct 14, there is provided at least one non-return valve 5 adapted to ensure the unidirectionality of the flow of lubricant from the stem to the piston head.

## Claims

1. A piston (1; 500; 700) for a die-casting machine, in particular a cold chamber die-casting machine, where said machine comprises a press with a container (400) in which the piston (1; 500; 700) is housed so as to slide, the piston (1; 500; 700) comprising,
- a stem (10; 510; 710) extending from a proximal end (11) to a distal end (12; 512; 712) along a piston axis (X) ;
- a piston head (50; 550; 750) which is removably connected to the distal end (12; 512; 712) of the stem (10; 510; 710) and has a side wall with at least one sealing area (52; 552; 752) suitable to form a seal on the wall of said container (400) of the press; and
- a lubrication circuit suitable to facilitate the sliding of the piston in said container (400) and comprising:
- at least one first lubrication duct (14, 16, 18) made in the stem (10; 510; 710) and ending at the distal end (12; 512; 712) of said stem, and
- at least one second duct (20) made in the piston head (50; 550; 750), fluidically communicating with said first duct and flowing into the lateral wall at least corresponding to said sealing area (52; 552; 752),
the piston (1; 500; 700) being **characterized by** the fact that sealed fluidic connection means (4; 560) between said first lubrication duct (14, 16, 18) and said second lubrication duct (20) are provided between said stem (10; 510; 710) and head (50; 550; 750), said sealed fluidic connection means (4; 560) comprising a connection bushing (4) inserted with calibrated interference one half in a terminal section of the first lubrication duct (18) and the other half in an initial section of the second lubrication duct (20).

2. A piston (1; 500; 700) according to the preceding claim, wherein each of said halves is fitted with an annular sealing element (61).

3. A piston (1; 500; 700) according to claim 1 or 2, wherein said sealing area (52; 552; 752) is provided with at least one sealing ring (60) housed in a respective ring seat (62) formed in the side wall of the head, said sealing ring (60) being longitudinally interrupted by a longitudinal slit (60') permitting the radial expansion of the sealing ring (60), and wherein the second lubrication duct (20) flows into said ring seat (62) under said sealing ring (60), said second duct (20) being covered by the sealing ring (60), such that the lubricant flows out from the piston head (50; 550; 750) through the gaps between the sealing ring (60) and the piston head (50; 550; 750) and/or through said longitudinal slit (60').

4. A piston (1; 500; 700) according to claim 3, wherein said gaps comprise at least the gap between the sealing ring (60) and the rear edge (62a) that delimits the ring seat (62) posteriorly.

5. A piston (1; 500; 700) according to claim 3 or 4, wherein said gaps have a width of 0.1 mm or less.

6. A piston (1; 500; 700) according to any one of the claims 3-5, wherein the bottom (62') of the ring seat (62) is connected to the front surface (602) of the piston head (50; 550; 750) through connecting channels (604) for a metal influx under the sealing ring (60), and wherein between the apertures of said connecting channels (604) at the bottom (62') of the ring seat (62) and the rear edge (62a) of said seat (62), the sealing ring (60) and the ring seat (62) have interlocking coupling portions (606, 608) adapted to stop the passage of metal in the liquid state from penetrating below the sealing ring (60).

7. A piston (1; 500; 700) according to the preceding claim, wherein said second lubrication duct (20) flows into the rear portion of the ring seat (62) comprised between said interlocking coupling portions (606, 608) and the rear edge (62a) of the ring seat (62).

8. A piston (1; 500; 700) according to any of the preceding claims, wherein the first lubrication ducts (14, 16, 18) comprise a feed duct (14) which extends longitudinally from a lubricant inlet hole (15) and which branches into at least two distribution ducts (18) angularly equidistant in relation to the piston axis (X), the second lubrication ducts (20) being a continuation of said distribution ducts (18).

9. Piston (1; 500; 700) according to any of the claims 3-8, wherein said second ducts (20) have a first section (20') parallel to the piston axis (X) and at least one second radial section (20") flowing into the ring seat (62) .

10. A piston (1; 500; 700) according to any one of the preceding claims, wherein a cooling circuit is made in the stem (10; 510; 710) and in the piston head (50; 550; 750) suitable to circulate a cooling fluid inside the piston head (50; 550; 750).

## Patentansprüche

1. Kolben (1; 500; 700) für eine Druckgussmaschine, insbesondere eine Kaltkammer-Druckgussmaschine, wobei die Maschine eine Presse mit einem Behälter (400) umfasst, in dem der Kolben (1; 500; 700) gleitend aufgenommen ist, wobei der Kolben (1; 500; 700) Folgendes umfasst:
- eine Stange (10; 510; 710), die sich entlang einer Kolbenachse (X) von einem proximalen Ende (11) zu einem distalen Ende (12; 512; 712) erstreckt;
- einen Kolbenkopf (50; 550; 750), der lösbar mit dem distalen Ende (12; 512; 712) der Stange (10; 510; 710) verbunden ist und eine Seitenwand mit mindestens einem Dichtungsbereich (52; 552; 752) aufweist, der dafür geeignet ist, eine Dichtung an der Wand des Behälters (400) der Presse zu bilden; und
- einen Schmierkreislauf, der dafür geeignet ist, das Gleiten des Kolbens in dem Behälter (400) zu erleichtern, und der Folgendes umfasst:
- mindestens einen ersten Schmierkanal (14, 16, 18), der in der Stange (10; 510; 710) hergestellt ist und an dem distalen Ende (12; 512; 712) der Stange endet, und
- mindestens einen zweiten Kanal (20), der in dem Kolbenkopf (50; 550; 750) hergestellt ist, in Fluidverbindung mit dem ersten Kanal steht und zumindest entsprechend dem einen Dichtungsbereich (52; 552; 752) in die Seitenwand mündet,
wobei der Kolben (1; 500; 700) **dadurch gekennzeichnet ist, dass** abgedichtete fluidische Anschlussmittel (4; 560) zwischen dem ersten Schmierkanal (14, 16, 18) und dem zweiten Schmierkanal (20) zwischen der Stange (10; 510; 710) und dem Kopf (50; 550; 750) vorgesehen sind, wobei die abgedichteten fluidischen Anschlussmittel (4; 560) eine Anschlusshülse (4) umfassen, die mit abgestimmtem Übermaß zu einer Hälfte in einem Endabschnitt des ersten Schmierkanals (18) und mit der anderen Hälfte in einem Anfangsabschnitt des zweiten Schmierkanals (20) eingesetzt ist.

2. Kolben (1; 500; 700) nach dem vorhergehenden Anspruch, wobei jede der Hälften mit einem ringförmigen Dichtungselement (61) ausgestattet ist.

3. Kolben (1; 500; 700) nach Anspruch 1 oder 2, wobei der Dichtungsbereich (52; 552; 752) mit mindestens einem Dichtungsring (60) versehen ist, der in einem jeweiligen Ringsitz (62), der in der Seitenwand des Kopfs gebildet ist, aufgenommen ist, wobei der Dichtungsring (60) in Längsrichtung durch einen Längsschlitz (60') unterbrochen wird, der die radiale Ausdehnung des Dichtungsrings (60) zulässt, und wobei der zweite Schmierkanal (20) unter dem Dichtungsring (60) in den Ringsitz (62) mündet, wobei der zweite Kanal (20) von dem Dichtungsring (60) bedeckt wird, sodass das Schmiermittel aus dem Kolbenkopf (50; 550; 750) heraus durch die Zwischenräume zwischen dem Dichtungsring (60) und dem Kolbenkopf (50; 550; 750) und/oder durch den Längsschlitz (60') fließt.

4. Kolben (1; 500; 700) nach Anspruch 3, wobei die Zwischenräume mindestens den Zwischenraum zwischen dem Dichtungsring (60) und der hinteren Kante (62a), die den Ringsitz (62) nach hinten begrenzt, umfassen.

5. Kolben (1; 500; 700) nach Anspruch 3 oder 4, wobei die Zwischenräume eine Breite von 0,1 mm oder weniger aufweisen.

6. Kolben (1; 500; 700) nach einem beliebigen der Ansprüche 3-5, wobei der Boden (62') des Ringsitzes (62) durch Verbindungskanäle (604) für einen Metallzustrom unter dem Dichtungsring (60) mit der vorderen Oberfläche (602) des Kolbenkopfs (50; 550; 750) verbunden ist, und wobei der Dichtungsring (60) und der Ringsitz (62), zwischen den Öffnungen der Verbindungskanäle (604) an dem Boden (62') des Ringsitzes (62) und der hinteren Kante (62a) des Sitzes (62), ineinandergreifende Kopplungsabschnitte (606, 608) aufweisen, die dafür ausgelegt sind, ein Eindringen des Durchlaufs von Metall im flüssigen Zustand unter den Dichtungsring (60) zu stoppen.

7. Kolben (1; 500; 700) nach dem vorhergehenden Anspruch, wobei der zweite Schmierkanal (20) in den hinteren Abschnitt des Ringsitzes (62) mündet, der zwischen den ineinandergreifenden Kopplungsabschnitten (606, 608) und der hinteren Kante (62a) des Ringsitzes (62) umfasst ist.

8. Kolben (1; 500; 700) nach einem beliebigen der vorhergehenden Ansprüche, wobei die ersten Schmierkanäle (14, 16, 18) einen Zuführkanal (14) umfassen, der sich von einer Schmiermitteleinlassöffnung (15) aus in Längsrichtung erstreckt und der sich in mindestens zwei Verteilungskanäle (18) in gleichen Winkelabständen in Bezug auf die Kolbenachse (X) verzweigt, wobei die zweiten Schmierkanäle (20) eine Fortsetzung der Verteilungskanäle (18) sind.

9. Kolben (1; 500; 700) nach einem beliebigen der Ansprüche 3-8, wobei die zweiten Kanäle (20) einen ersten Abschnitt (20') parallel zu der Kolbenachse (X) und mindestens einen zweiten radialen Abschnitt (20"), der in den Ringsitz (62) mündet, aufweisen.

10. Kolben (1; 500; 700) nach einem beliebigen der vorhergehenden Ansprüche, wobei in der Stange (10; 510; 710) und in dem Kolbenkopf (50; 550; 750) ein Kühlkreislauf hergestellt ist, der dafür geeignet ist, ein Kühlfluid im Inneren des Kolbenkopfs (50; 550; 750) zu zirkulieren.

## Revendications

1. Piston (1 ; 500 ; 700) pour une machine à couler sous pression, en particulier une machine à couler sous pression à chambre froide, où ladite machine comprend une presse avec un contenant (400) dans lequel est logé le piston (1 ; 500 ; 700) de façon à coulisser, le piston (1 ; 500 ; 700) comprenant,
- une tige (10; 510; 710) s'étendant d'une extrémité proximale (11) à une extrémité distale (12 ; 512 ; 712) selon un axe de piston (X) ;
- une tête de piston (50 ; 550 ; 750) qui est raccordée amovible à l'extrémité distale (12 ; 512 ; 712) de la tige (10 ; 510 ; 710) et a une paroi de côté avec au moins une zone d'étanchéité (52 ; 552 ; 752) appropriée pour former un joint d'étanchéité sur la paroi dudit contenant (400) de la presse ; et
- un circuit de lubrification approprié pour faciliter le coulissement du piston dans ledit contenant (400) et comprenant :
- au moins un premier conduit de lubrification (14, 16, 18) réalisé dans la tige (10 ; 510 ; 710) et se terminant au niveau de l'extrémité distale (12 ; 512 ; 712) de ladite tige, et
- au moins un second conduit (20) réalisé dans la tête de piston (50 ; 550 ; 750), communiquant fluidiquement avec ledit premier conduit et s'écoulant dans la paroi latérale correspondant au moins à ladite zone d'étanchéité (52 ; 552 ; 752),
le piston (1 ; 500 ; 700) étant **caractérisé par le fait que** des moyens de raccordement fluidique étanches (4 ; 560) entre ledit premier conduit de lubrification (14, 16, 18) et ledit second conduit de lubrification (20) sont prévus entre ladite tige (10 ; 510 ; 710) et ladite tête (50 ; 550 ; 750), lesdits moyens de raccordement fluidique étanches (4 ; 560) comprenant une douille de raccordement (4) insérée avec serrage calibré, une moitié dans une section terminale du premier conduit de lubrification (18) et l'autre moitié dans une section initiale du second conduit de lubrification (20).

2. Piston (1 ; 500 ; 700) selon la revendication précédente, dans lequel chacune desdites moitiés est munie d'un élément d'étanchéité annulaire (61).

3. Piston (1 ; 500 ; 700) selon la revendication 1 ou 2, dans lequel ladite zone d'étanchéité (52 ; 552 ; 752) est pourvue d'au moins une bague d'étanchéité (60) logée dans un siège de bague (62) respectif formé dans la paroi de côté de la tête, ladite bague d'étanchéité (60) étant interrompue longitudinalement par une fente longitudinale (60') permettant la dilatation radiale de la bague d'étanchéité (60), et dans lequel le second conduit de lubrification (20) s'écoule dans ledit siège de bague (62) sous ladite bague d'étanchéité (60), ledit second conduit (20) étant couvert par la bague d'étanchéité (60), de sorte que le lubrifiant s'écoule hors de la tête de piston (50 ; 550 ; 750) à travers les écartements entre la bague d'étanchéité (60) et la tête de piston (50 ; 550 ; 750) et/ou à travers ladite fente longitudinale (60').

4. Piston (1 ; 500 ; 700) selon la revendication 3, dans lequel lesdits écartements comprennent au moins l'écartement entre la bague d'étanchéité (60) et le bord arrière (62a) qui délimite le siège de bague (62) à l'arrière.

5. Piston (1 ; 500 ; 700) selon la revendication 3 ou 4, dans lequel lesdits écartements ont une largeur de 0,1 mm ou moins.

6. Piston (1 ; 500 ; 700) selon l'une quelconque des revendications 3 à 5, dans lequel le fond (62') du siège de bague (62) est raccordé à la surface avant (602) de la tête de piston (50 ; 550 ; 750) par le biais de canaux de raccordement (604) pour un débit entrant de métal sous la bague d'étanchéité (60), et dans lequel entre les ouvertures desdits canaux de raccordement (604) au niveau du fond (62') du siège de bague (62) et le bord arrière (62a) dudit siège (62), la bague d'étanchéité (60) et le siège de bague (62) ont des portions de couplage à emboîtement (606, 608) adaptées pour arrêter le passage de métal à l'état liquide et l'empêcher de pénétrer en dessous de la bague d'étanchéité (60).

7. Piston (1 ; 500 ; 700) selon la revendication précédente, dans lequel ledit second conduit de lubrification (20) s'écoule dans la portion arrière du siège de bague (62) comprise entre lesdites portions de couplage à emboîtement (606, 608) et le bord arrière (62a) du siège de bague (62).

8. Piston (1 ; 500 ; 700) selon l'une quelconque des revendications précédentes, dans lequel les premiers conduits de lubrification (14, 16, 18) comprennent un conduit d'alimentation (14) qui s'étend longitudinalement depuis un orifice d'entrée de lubrifiant (15) et qui se ramifie en au moins deux conduits de distribution (18) équidistants angulairement par rapport à l'axe de piston (X), les seconds conduits de lubrification (20) étant un prolongement desdits conduits de distribution (18).

9. Piston (1 ; 500 ; 700) selon l'une quelconque des revendications 3 à 8, dans lequel lesdits seconds conduits (20) ont une première section (20') parallèle à l'axe de piston (X) et au moins une seconde section radiale (20") s'écoulant dans le siège de bague (62).

10. Piston (1 ; 500 ; 700) selon l'une quelconque des revendications précédentes, dans lequel un circuit de refroidissement est réalisé dans la tige (10 ; 510 ; 710) et dans la tête de piston (50 ; 550 ; 750) approprié pour faire circuler un fluide de refroidissement à l'intérieur de la tête de piston (50 ; 550 ; 750).
